# EUROPEAN PATENT APPLICATION

(11) **EP 2 197 192 A1**
(43) Date of publication of application: **16.06.2010**
(21) Application number: 08305939.4
(22) Date of filing: 15.12.2008
(51) Int. Cl.: H04M 11/06, G06F 11/07

(54) **Systems and methods for symmetric high-speed digital subscriber line modem startup analysis and diagnosis**

(71) Applicant: Thomson Licensing, 92443 Issy-les-Moulineaux Cedex (FR)
(72) Inventor: Dong, Hong, 100085, BEIJING (CN)
(74) Representative: Ruellan-Lemonnier, Brigitte

(57) **Abstract**

A system (300) uses an extractor (304) to extract information from a modem trace log that relates to a symmetric high-speed digital subscriber line (SHDSL) physical layer startup procedure. The system then uses a description tool (306) to derive a description of the startup procedure using an event point data structure. The data structure is then passed to an analyzer (308) that analyzes the event point data structure description to help resolve interoperability issues with a modem (302). A diagnostic tool (310) can also be used by the system to automatically self correct the modem's startup procedures.

## Description

### TECHNICAL FIELD

The subject matter relates generally to telecommunications, and more particularly to systems and methods for automatically diagnosing SHDSL modem connection problems.

### BACKGROUND

Digital Subscriber Lines (DSL) allow transmission of data over existing plain old telephone systems (POTS) at a much higher rate than traditional telephone line modem systems. Despite their increased speed, consumers have continued to demand even higher data rates. Symmetric High-speed DSL (SHDSL) allows higher data rates while using fewer wires in a POTS configuration and with less bleed through into other wires. SHDSL also allows data transmission over greater distances with fewer repeaters. As the popularity of SHDSL increases, so does the demand for technical support of customer premise equipment (CPE) or field equipment such as SHDSL modems. During a field application of SHDSL CPE in connection with various Digital Subscriber Line Asynchronous Multiplexers (DSLAMs), there are frequently interoperability issues between the SHDSL physical layers of the CPE and the central office (CO) equipment. To resolve these conflicts, trace logs are gathered from CPE in the field and brought back to a location for manual analysis and diagnosis. If a solution is found, a return visit to the CPE is required to implement the fix. Thus, this process requires many communications between the field and technical support, which causes long delays, resulting in a very slow response to customer problems and consequently, loss of market share.

### SUMMARY

The SHDSL physical layer start up procedure is automatically analyzed and diagnosed to resolve startup conflicts for field applications (e.g., CPE) of SHDSL modems. In one aspect, information for a SHDSL physical layer start up procedure is extracted from a trace log. The extracted information is then utilized to create a startup procedure description using an event point data structure. Algorithms are then applied to the data structure to analyze and diagnose conflicts. Knowledge databases can be used as well to help determine causes and conflict solutions. By implementing these techniques inside a SHDSL modem, interoperability issues can be automatically solved in the field application phases, reducing the complexity and the response time needed to solve field interoperability problems, advantageously improving a customer's satisfaction.

In one aspect of the present principles, a system is provided, the system comprising an extractor that extracts information from a modem trace log relating to a symmetric high-speed digital subscriber line (SHDSL) physical layer startup procedure, a description tool that derives a description of the startup procedure using an event point data structure, and an analyzer that analyzes the event point data structure description to help resolve operational conflicts.

In another aspect of the present principles, a method is provided, the method comprising the steps of extracting information from a modem trace log relating to a symmetric high-speed digital subscriber line (SHDSL) physical layer startup procedure, deriving a description of the procedure using an event point data structure, and analyzing the event point data structure description to help resolve operational conflicts.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

To the accomplishment of the foregoing and related ends, certain illustrative aspects of embodiments are described herein in connection with the following description and the annexed drawings. These aspects are indicative, however, of but a few of the various ways in which the principles of the subject matter can be employed, and the subject matter is intended to include all such aspects and their equivalents. Other advantages and novel features of the subject matter can become apparent from the following detailed description when considered in conjunction with the drawings.

### BRIEF DESCRIPTION OF THE DRAWINGS

FIG. 1 is an illustration of an environment employing a SHDSL modem in accordance with an aspect of an embodiment.
FIG. 2 is an example of a process to determine an interoperability condition of a SHDSL modem in a field environment in accordance with an aspect of an embodiment.
FIG. 3 is a block diagram of a SHDSL modem employing automatic SHDSL startup procedure interoperability resolution in accordance with an aspect of an embodiment.
FIG. 4 is a flow diagram of a method of automatically resolving SHDSL startup procedure interoperability issues in accordance with an aspect of an embodiment.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details. In other instances, well-known structures and devices are shown in block diagram form in order to facilitate describing the embodiments.

As used in this application, the term "component" is intended to refer to hardware, software, or a combination of hardware and software in execution. For example, a component can be, but is not limited to being, a process running on a processor, a processor, an object, an executable, *and*/*or* a microchip and the like. By way of illustration, both an application running on a processor and the processor can be a component. One or more components can reside within a process and a component can be localized on one system *and*/*or* distributed between two or more systems. Functions of the various components shown in the figures can be provided through the use of dedicated hardware as well as hardware capable of executing software in association with appropriate software.

When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage. Moreover, all statements herein reciting instances and embodiments of the invention are intended to encompass both structural and functional equivalents. Additionally, it is intended that such equivalents include both currently known equivalents as well as equivalents developed in the future (i.e., any elements developed that perform the same function, regardless of structure).

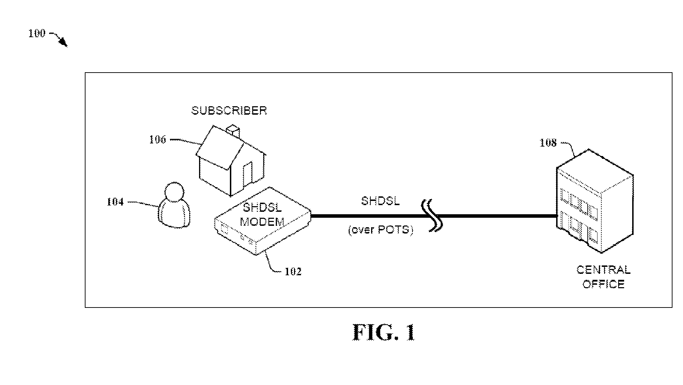

As shown in the illustration 100 of FIG.1, SHDSL modems 102 can be installed for customers 104 at their homes 106. SHDSL communication occurs over POTS lines to a central office (CO) 108. Using the present principles disclosed herein, the SHDSL modem can be installed and automatically field tested for any interoperability problems with the central office 108. The SHDSL modem can automatically self-check when connected to the central office and/or a mode switch/button (hardware and/or software) can be used to trigger a self-check routine. In another aspect, the SHDSL modem 102 can be interconnected with a remote support facility that can command a self-check either via the SHDSL connection (if working) and/or through some alternative communication means such as, for example, a wireless connection and the like. This would enable the tech support person to initiate, monitor and help implement any required fixes without visiting the field sight (e.g., the home 106 of the customer 104). Advantageously, these principles significantly reduce the amount of time it takes to provide solutions to interoperability issues, greatly increasing customer satisfaction.

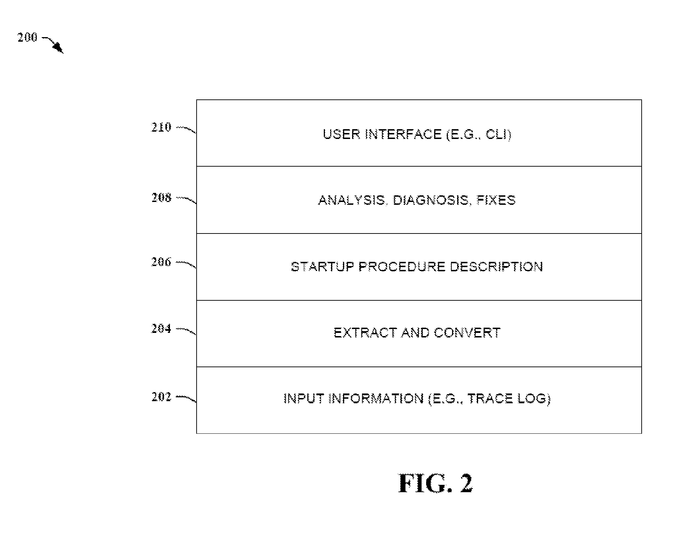

FIG. 2 is an example of a layered process 200 to determine an interoperability condition of a SHDSL modem in a field environment. In the layered process 200, the data structure design for the start up procedure description 206 and the algorithms used for analysis, diagnosis and fixes 208 help to provide field solutions for SHDSL technology. Block 202 represents the function of inputting information needed which is then extracted and converted 204 into the startup procedure description 206. The structure of the startup procedure description 206 allows proper analysis, diagnosis and fixes 208. These functions can be accessed using a user interface such as a command line interface (CLI) and the like.

The data structure design for the startup procedure description 206 can be accomplished according to standards initiated by the International Telecommunication Union (ITU). For example, for asynchronous transfer mode transmission convergence (ATM-TC), standards specified in ITU-G.991.2 and ITU-G.994.1 can be used. Thus, the SHDSL physical layer startup procedure can be divided into G994.1 procedures, training procedures and optional line probing procedures and transmission convergence (TC) synchronizing procedures. Similarly, other standards, such as the Institute of Electrical and Electronics Engineers (IEEE) standard 802.3ah and the like, can be used for Ethernet in the first mile transmission convergence (ETM-TC) to add discovery and aggregation procedures and introduce g.handshake message formats.

The procedure is based on a certain data structure facilitate analysis and/or diagnosis. The SHDSL physical layer startup procedure is a sequence of event points. For each event point, an item is used that is composed of several elements. For example, corresponding to procedures specified in the above mentioned standards, the following event points can occur:

```
       Event point ={time stamp, object, status, related signal name, signal
      details}
       Object ={STU-R-0, STU-R-1, STU-R-2, STU-R-3, STU-C-0, ...},
       Status ={link down, link up, R-Tone, R-silent, g994.1-sending, g994.1-
             receiving, training, TC-hunting ...},
       Signal name ={R-tone, R-silent, CLR, CL, MR, MP, MS, Tr, Tc, Sr, Sc,
       ...},
```

Algorithm examples that can be utilized with the layered process 200 are now described. During the startup procedure analysis 208, the parameters of the procedure need to be defined so that it can be properly analyzed. For example, determination of the configuration on the central office (CO) and the customer premise equipment (CPE); whether synchronization is achieved at the end of the startup procedure and, if so, what are its parameters; determination of which sub phases make up the startup procedure (e.g., G994.1 sub procedures, etc.); determination of the time spent for the entire startup procedure and/or for each sub procedure; and/or determination of any exception stop points and the like. These targeted parameters are then calculated based on the procedure description data.

Problems can then be identified based on the analysis results. For example, problems can be construed based on procedure completeness: Is the procedure completed with a synchronized status? If no, there can be a problem; Is there consistency? If the result of the procedure does not indicate the same as configured, there can be a problem; and/or Is there a timing issue? If the time spent in a certain sub procedure exceeds a threshold, there can be a problem and the like.

Once the data is analyzed, problems can be diagnosed based on the analyzed data and/or with the aid of a knowledge database. For example, for a no synchronization problem, the settings on the CO and CPE can be compared to check if it is caused by a misconfiguration. The checking steps for diagnosis can be written in a configuration file for the modem software and, thus, new steps can be added to extend the algorithm. This enables the diagnostics to have a 'learning' feature. Once a problem is diagnosed, the issue can be automatically resolved using the diagnosis function. Based on the problem cause determined by the diagnosis function, certain actions can be taken such as, for example, configuring the modem with correct settings, etc. The actions to solve particular issues can also be predefined in a file and/or in the software of the modem. Thus, the solving actions can be added and/or improved by updating the file and/or software to include more problem solving experiences.

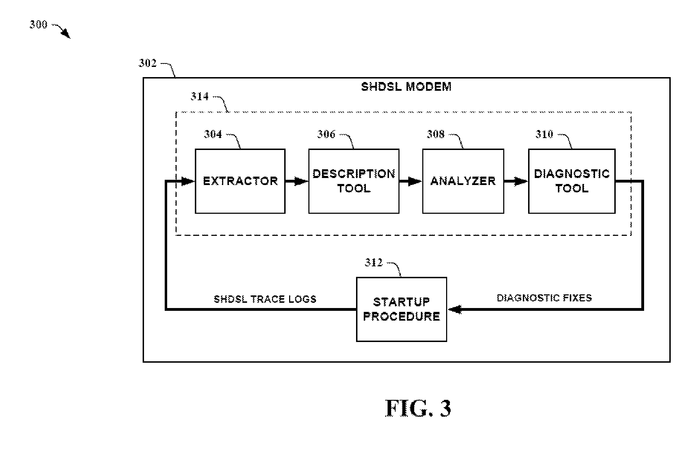

FIG. 3 is a block diagram 300 of a SHDSL modem 302 employing automatic SHDSL startup procedure interoperability resolution. One skilled in the art can appreciate that the blocks represented by 314 can reside within the modem 302 and/or portions or all can reside remotely to the modem 302. When startup issues occur, it can greatly hamper the main communication means such as SHDSL. Thus, alternative means of communication can be provided by the modem 302 to allow communication of startup parameters and the like. Similarly, a remote technician can facilitate in suggesting solutions based on observed data extracted from the modem 302. Thus, the present principles allow a great deal of flexibility in executing the techniques described herein.

For this example, the blocks 314 reside within the modem 302. The modem 302 typically resides at a field location and, thus, is referred to as customer premise equipment or CPE (i.e., it resides at the customer's location). Therefore, it is difficult for a field technician to travel to the location, retrieve data and return to a support facility to process the data. The technician might then have to return to the location to apply a fix for the issue. With the present principles, startup related information such as, for example, SHDSL trace logs and the like can be retrieved from a startup procedure 312 from within the modem 302. This is accomplished by an extractor 304 that extracts information from the trace log related to the SHDSL physical layer startup procedure. A description tool 306 then derives a description of the startup procedure using an event point data structure (as described above).

An analyzer 308 then analyzes the event point data structure description to help resolve operational conflicts. The analyzer 308 can also utilize knowledge databases to aid in the analysis. Knowledge databases contain information gained from personnel with experience in analyzing modem startups. Their knowledge can be formatted and placed into a database such that it can be recalled by other programs to aid in determining issues/problems and the like. The analyzer 308 can be utilized to determine the configuration of a central office and the customer premise equipment (e.g., modem 302), to determine if synchronization is occurring and its operating parameters, to determine phases or sub phases (e.g., sub procedures) of the startup procedure, to determine the consumed time for procedures and sub procedures, and/or to determine exception stop points and the like.

Optionally, a diagnostic tool 310 can be employed to automatically resolve the operational conflicts based on the analysis of the event point data structure description. The diagnostic tool 310 can be option in some situations where automatic resolutions are not permitted or not achievable by the technology employed. For example, in a high security area, the modem 302 can report issues along with data to a remote support location. The fix might entail entering new encryption data which can require direct entry into the modem 302 (support technician can arrive with codes in hand and enter the fix in a brief period of time without needing to travel back and forth to resolve the issue). The diagnostic tool 310 can also employ a knowledge database to help in determine the cause of a problem and/or to help in implementing diagnostic fixes that can the be applied to the startup procedure 312.

The diagnostic tool 310 can be used, for example, to determine a startup procedure's completeness including synchronous status, to determine if the startup procedure result is consistent with its configuration, and/or to determine if time spent on a startup sub procedure exceeds a threshold for that startup sub procedure and the like. It can also utilize algorithms that are specific to a given type of conflict. This allows the diagnostic tool 310 to be tuned to better diagnose particular types of problems. The algorithms and other information can be stored in tables and the like to allow them to be updated. Thus, the diagnostic tool 310 can learn new techniques through the updates.

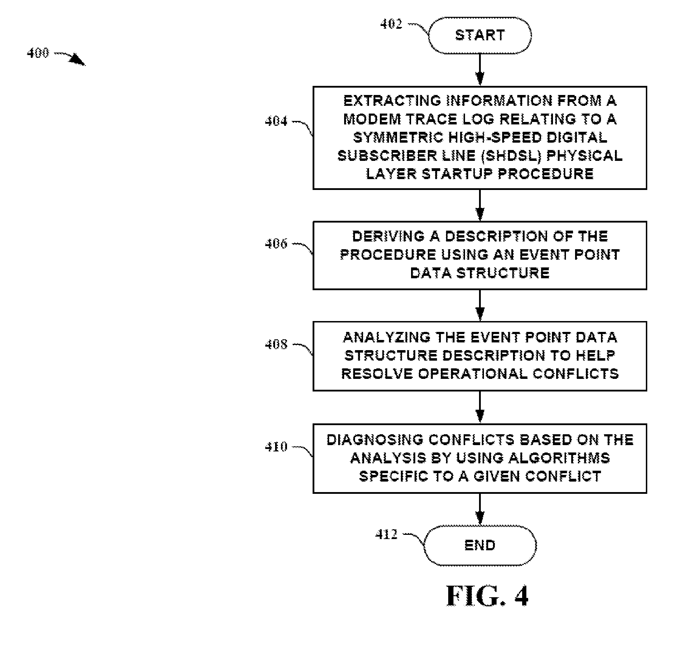

In view of the exemplary systems shown and described above, methodologies that can be implemented in accordance with the embodiments will be better appreciated with reference to the flow chart of FIG. 4. While, for purposes of simplicity of explanation, the methodologies are shown and described as a series of blocks, it is to be understood and appreciated that the embodiments are not limited by the order of the blocks, as some blocks can, in accordance with an embodiment, occur in different orders *and*/*or* concurrently with other blocks from that shown and described herein. Moreover, not all illustrated blocks may be required to implement the methodologies in accordance with the embodiments.

FIG. 4 is a flow diagram of a method 400 of automatically resolving SHDSL startup procedure interoperability issues. The method 400 starts 402 by extracting information from a modem trace log relating to a symmetric high-speed digital subscriber line (SHDSL) physical layer startup procedure 404. A description of the procedure is then derived using an event point data structure 406. As described above, the event point data structure can be from a standard or standardized. The event point data structure description is analyzed to help resolve operational conflicts 408. The analysis can occur automatically with or without the aid of a technician. Analysis routines can include, but are not limited to, determining configuration of central office and customer premise equipment, determining if synchronization is occurring and its operating parameters, determining phases or sub phases of the startup procedure, determining consumed time for procedures and sub procedures, and/or determining exception stop points and the like. The analysis can also include the use of a knowledge database that can be updated.

Conflicts based on the analysis are diagnosed by using algorithms specific to a given conflict 410, ending the flow. The diagnosis can occur automatically with or without the aid of a technician. It can include diagnosing conflicts of interoperability based on the analysis by using algorithms specific to a given type of conflict and the like. The diagnosis can include the use of a knowledge database that can be updated to allow additional learning of problems and solutions. The diagnosis can include, but is not limited to, identifying a startup conflict of a SHDSL modem such as, for example, determining the startup procedure's completeness including synchronous status, determining if the startup procedure result is consistent with its configuration, and/or determining if time spent on a startup sub procedure exceeds a threshold for that startup sub procedure and the like.

Any step of the above method can be accomplished locally in a SHDSL modem and/or remotely to a SHDSL modem. Thus, the modem can be remotely connected through a communication means other than that which it is using to attempt central office (CO) communication. The other means can include, but is not limited to, wireless, wired, satellite, and/or cable communication means and the like.

What has been described above includes examples of the embodiments. It is, of course, not possible to describe every conceivable combination of components or methodologies for purposes of describing the embodiments, but one of ordinary skill in the art can recognize that many further combinations and permutations of the embodiments are possible. Accordingly, the subject matter is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system, comprising:
means for extracting (304, 306) an event point data structure from a modem trace log relating to a symmetric high-speed digital subscriber line (SHDSL) physical layer startup procedure; and
an analyzer (308) that analyzes the event point data structure description to help resolve operational conflicts.

2. The system of claim 1, wherein the analyzer uses a database to augment the analysis of the event point data structure.

3. The system of claim 1 further comprising:
a diagnostic tool (310) that automatically resolves startup operation conflicts based on the analysis of the event point data structure description of the SHDSL physical layer startup procedure.

4. The system of claim 3, wherein the diagnostic tool automatically resolves physical layer operational conflicts between an SHDSL modem at a customer's location and a central office.

5. The system of claim 3, wherein the diagnostic tool diagnoses startup procedure conflicts based on the analysis by using at east one algorithm specific to a given conflict.

6. The system of claim 1, wherein the analyzer performs at least one of the following to analyze the event point data structure description:
determines configuration of central office and customer premise equipment;
determines if synchronization is occurring and its operating parameters;
determines phases or sub phases of the startup procedure;
determines consumed time for procedures and sub procedures; or
determines exception stop points.

7. A method, comprising the steps of:
extracting information from a modem trace log relating to a symmetric high-speed digital subscriber line (SHDSL) physical layer startup procedure (404);
deriving a description of the procedure using an event point data structure (406); and
analyzing the event point data structure description to help resolve operational conflicts (408).

8. The method of claim 7 further comprising the step of:
using a knowledge database to augment the analyzing of the description.

9. The method of claim 7 further comprising the step of:
automatically resolving startup operation conflicts based on the analysis of the event point data structure description of the SHDSL physical layer startup procedure.

10. The method of claim 7 further comprising the step of:
automatically resolving physical layer operational conflicts between an SHDSL modem at a customer's location and a central office.

11. The method of claim 7 further comprising the step of analyzing the description by performing at least one of the following steps:
determining configuration of central office and customer premise equipment;
determining if synchronization is occurring and its operating parameters;
determining phases or sub phases of the startup procedure;
determining consumed time for procedures and sub procedures; or
determining exception stop points.

12. The method of claim 7 further comprising the step of:
identifying a startup conflict of the SHDSL modem.

13. The method of claim 12 further comprising the step of identifying the startup conflict by performing at least one of the following steps:
determining the startup procedure's completeness including synchronous status;
determining if the startup procedure result is consistent with its configuration; or
determining if time spent on a startup sub procedure exceeds a threshold for that startup sub procedure.

14. The method of claim 7 further comprising the step of:
diagnosing conflicts based on the analysis by using algorithms specific to a given conflict (410).

15. The method of claim 14 further comprising the step of:
learning additional diagnostic algorithms through updates.
